# EUROPÄISCHE PATENTANMELDUNG

(11) **EP 1 223 422 A1**
(43) Veröffentlichungstag der Anmeldung: **17.07.2002**
(21) Anmeldenummer: 01125640.1
(22) Anmeldetag: 26.10.2001
(51) Int. Cl.: G01N 21/39

(54) **Verfahren zur selektiven Detektion von Gasen mittels Laserspektroskopie**

(30) Priorität: 20.12.2000 DE 10063678
(71) Anmelder: SIEMENS AKTIENGESELLSCHAFT, 80333 München (DE)
(72) Erfinder: Hennig, Oliver, 80469 München (DE); Magori, Erhard, 85622 Feldkirchen (DE); Meixner, Hans, Prof., 85540 Haar (DE); Strzoda, Rainer, 81825 München (DE)

(57) **Zusammenfassung**

Das beschriebene Verfahren basiert auf der optischen Absorptionsspektroskopie im infraroten Wellenlängenbereich unter Einsatz von Laserdioden. Dabei wird eine monomodig emittierende Laserdiode über einen bestimmten Wellenlängenbereich durchgestimmt, wobei charakteristische Spektrallinien von zu detektierenden Gasen überstrichen werden. Der Einsatz von vertikal emittierenden Laserdioden (VCSEL) ist mit einer besonders niedrigen Stromaufnahme verbunden. Besonders vorteilhaft ist der Betrieb ohne Temperaturstabilisierung des Lasers. Ein diskontinuierlicher Betrieb des Systems erbringt weitere Stromersparnisse.

## Beschreibung

Die Erfindung betrifft ein Verfahren zur selektiven Gasdetektion mit niedrigem Energieverbrauch.

Die Gassensorik ist für eine Vielzahl von Aufgaben im Bereich Sicherheit, Komfort und Umweltschutz außerordentlich wichtig. Auf diesen Gebieten besteht ein großer Bedarf an kostengünstigen und zuverlässigen Gassensoren. Insbesondere ist die Umgebung auf explosive, toxische oder dem Menschen unbehagliche Gaskonzentrationen zu überwachen. Dies geschieht im Stand der Technik durch verschiedenste Verfahren bzw. Gassensoren.

In den vielfältigen Anwendungen der Gassensorik sind zum Teil Gassensoren verwendet worden, die mit hohen Leistungsaufnahmen verbunden sind. Hier sind beispielsweise die resistiven Metalloxidgassensoren zu nennen, die im Haushalt für die Leckageüberwachung auf Erdgas einsetzt werden, jedoch für die erforderliche Beheizung, beispielsweise eine Leistungsaufnahme von typisch 1 Watt erfordern und daher nicht ohne Netzanschluss betrieben werden können. Andere Lösungen für Gassensoren wie beispielsweise eine elektrochemische Zelle sind nicht langzeitstabil, und konventionelle optische Gassensoren sind in der Regel nicht selektiv genug, um auf eine einzige Gaskomponente angesetzt zu werden.

Insgesamt sollte bei der Auslegung von Gassensoren bzw. bei Verfahren zur Gasdetektion die Langzeitstabilität, die Selektivität und die Sensitivität der Sensoren bzw. der Verfahren optimiert werden. Bei einer Reihe von Anwendungen ist daneben eine niedrige Leistungsaufnahme zwingend notwendig.

Im Stand der Technik ist aus der deutschen Patentschrift DE 197 17 145 C2 ein Verfahren bekannt, das mit einer monomodigen DFB-Laserdiode unter Ausnutzung der Abstimmbarkeit dieser Diode bzgl. der Emissionswellenlänge über die Arbeitstemperatur der Diode, Teile der Spektren von zu messenden Gasen aufnimmt, bzw. abscannt, Gase anhand ihrer charakteristischen Spektrallinien detektiert und anschließend die Konzentration des Gases bestimmt. In der allgemeinen Ausführung der Messmethode wird üblicherweise die Laser-Betriebstemperatur mittels eines thermo-elektrischen Kühlers (Peltier-Element) konstant gehalten und die Abstimmung der Wellenlänge mittels Variation des Betriebstromes der Laserdiode herbeigeführt. Ein wesentlicher Nachteil dieser Anordnung besteht darin, dass der Betrieb der Laserdiode (ca. 0.1 W) und die Temperierung der Laserdiode (ca. 1 W) eine relativ hohe Leistung erfordern, wodurch zum Betrieb in der Regel ein Netzanschluss notwendig ist.

Der Erfindung liegt die Aufgabe zugrunde, Verfahren für die Gassensorik zur Verfügung zu stellen, die neben den Eigenschaften ausreichender Langzeitstabilität, Selektivität und Sensitivität mit einer niedrigen Leistungsaufnahme der damit verbundenen Systeme verbunden sind.

Die Lösung dieser Aufgabe geschieht durch die Merkmalskombination des Anspruches 1.

Vorteilhafte Ausgestaltungen können den Unteransprüchen entnommen werden.

Der Erfindung liegt die Erkenntnis zugrunde, dass sogenannte vertikal emittierende Laserdioden (VCSEL, Vertical Cavity Surface Emitting Laser), deren mittlere Leistungsaufnahme im Bereich von wenigen Milliwatt liegt, zur Gasdetektion verwendbar sind. Dies gründet auf der Tatsache, dass eine derartige Laserdiode monomodig Strahlung emittiert. Eine vertikal emittierende Laserdiode lässt sich bezüglich der Emissionswellenlänge durchstimmen. Dies geschieht, indem der Betriebsstrom durchgestimmt bzw. moduliert wird. Der Betrieb der vertikal emittierenden Diode geschieht analog zu dem Betrieb einer monomodigen DFB-Laserdiode (Distributed Feedback Diode). Der wesentliche Unterschied besteht darin, dass die vertikal emittierende Laserdiode bei der jeweiligen Umgebungstemperatur betrieben wird. Eine Stabilisierung der Betriebstemperatur entfällt. Diese Arbeitstemperaturen können beispielsweise im Bereich der Raumtemperatur liegen.

Ein Gassensor mit einem VCSEL kann in der beschriebenen Konfiguration wegen der niedrigen Leistungsaufnahme in vorteilhafter Weise in der Gebäude-Installationstechnik eingesetzt werden. Hier werden beispielsweise Sensoren an einem Bus betrieben, der nur eine begrenzte Leistung zur Verfügung stellt. Weiterhin ist denkbar, Gassensoren im privaten Bereich zu betreiben, die beispielsweise mit einer Batterieladung für mehrere Jahre autark ihren Dienst tun.

Wird ein beschriebenes System diskontinuierlich betrieben wie es für viele Anwendungen möglich ist, weil z.B. eine Zeitauflösung der Messung von wenigen 10 s bis zu einigen Minuten ausreicht, so lässt sich die mittlere Leistungsaufnahme drastisch reduzieren. So ist z. B. denkbar, dass die Messung mit einem niedrigen Tastverhältnis durchgeführt wird, d.h. die Messzeit im Vergleich zur Auszeit zwischen zwei einzelnen Messungen sehr klein ist. Bei einer Messzeit von 10 ms und einer Wiederholrate von 0,05 s⁻¹ ergibt sich beispielsweise insgesamt eine Leistungsreduzierung um den Faktor 2000 gegenüber dem kontinuierlichen Betrieb.

Es ist besonders vorteilhaft, eine vertikal emittierende Laserdiode zu verwenden, die auf Indiumphosphit basiert. Mit dem dadurch ermöglichten Emissionswellenlängenbereich von 1,2 bis über 2 um sind die Absorptionsbanden mehrerer technisch relevanter Gase, beispielsweise bei Methan, Kohlendioxid etc., zugänglich. Die Laserdioden dieser Art zeichnen sich durch einen thermischen Koeffizienten von ca. 0,1 nm/K und einen Abstimmkoeffizienten mit dem Laserstrom von mehr als 1 nm/mA aus. Damit ist eine Abstimmung mit dem Strom über mehrere Nanometer (nm) problemlos möglich. Die Abstimmung geschieht in der Regel annähernd linear und die Diode emittiert an jedem Punkt jeweils monomodig.

Durch die Messung der Arbeitstemperatur, die in der Umgebung der Messanordnung bzw. direkt an der Laserdiode oder an deren Träger anliegt, lässt sich der exakte Abstimmbereich der Laserdiode ermitteln, d.h. in Abhängigkeit von der Temperatur lässt sich vorhersagen, welches Wellenlängeintervall (λₐ..λₑ) der Laser bei der Messung überstreicht. Dies ermöglicht eine exakte Identifikation der gemessen Absorptionslinien.

Zur Erhöhung der Detektionssicherheit wird in vorteilhafter Weise eine Vorabsorption eingeführt. Dies bedeutet, dass die Messstrecke ein Volumen mit einer ausreichenden Konzentration des zu detektierendem Gas beinhaltet, welches im Strahlengang liegt.

Die Gassensorik mit Laserdioden zeichnet sich durch außerordentliche Selektivität gegenüber der Messgaskomponente aus. Auch bezüglich der Sensitivität ragt die Methode unter den klassischen spektroskopischen Verfahren hervor. Mit der Methode lässt sich ein langzeitstabiler und damit kalibrierfreier Gassensor realisieren. Unter Einbeziehung der Eigenschaften der VCSEL kommt noch die niedrige Leistungsaufnahme hinzu, was der Technik mit der Summe der genannten Eigenschaften neue Anwendungsfelder eröffnet.

Im folgenden wird anhand einer schematischen Figur ein Ausführungsbeispiel beschrieben:

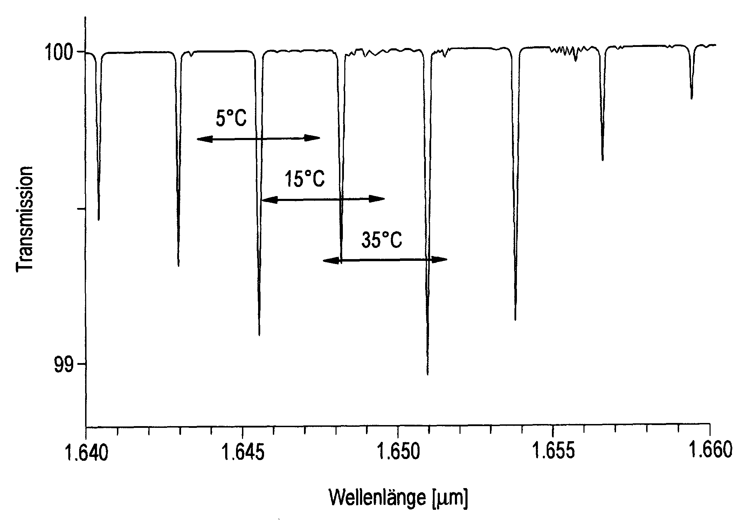

Die Figur zeigt das Methan-Absorptionsspektrum um 1,65 µm.

Darin treten Abstände zwischen den Absorptionslinien von ca. 2,5 nm auf. Betrachtet man dazu den Abstimmbereich des Lasers bei verschiedenen Temperaturen, so erkennt man, dass bei allen praktisch vorkommenden Temperaturen jeweils mindestens eine Absorptionslinie von der Laserdiode bzw. von deren emittierter Strahlung erfasst wird. Die Konzentrationsbestimmung erfolgt je nach Temperatur an einer anderen Absorptionslinie, wodurch ein großer Betriebstemperaturbereich für den Sensor erreicht wird und auf eine Temperaturstabilisierung für die Laserdiode verzichtet werden kann. Die Temperaturstabilisierung des Lasers war in der Laser-Gassensorik bisher notwendig und wurde mit einem Peltier-Element bewerkstelligt. Dies ist stellvertretend für ein Bauelement mit hoher Leistungsaufnahme.

Kurzwellige Galliumarsenid-basierte VCSEL sind seit längerer Zeit bekannt. Die Realisierung langwelliger Indiumphosphidbasierter VCSEL ist erst 1999 gelungen. Derartige Laserdioden werden in folgender Literaturstelle beschrieben: M. Ortsiefer, R. Shau, G. Böhm, F. Köhler, M.-C. Amann, "Room-Temperature Operation of index-guided 1.55 µm InP-based vertical-cavity surface-emitting Laser", Electronic Letters, 2^{nd} March 2000, Vol.36, No. 5.

Charakteristisch ist, dass die Emission der Laserstrahlung bei einem VCSEL einen vergleichbaren Wellenlängenbereich abdeckt wie die eines DFB-Lasers gleicher Wellenlänge. Der wesentliche Unterschied liegt in der Art der Abstimmung. Beim DFB-Laser muss die Betriebstemperatur um einige 10 K variiert werden, während beim VCSEL der Betriebstrom um wenige mA durchgestimmt wird. Das bewirkt in beiden Fällen eine Änderung der Temperatur in der Laser-aktiven Schicht, die die Emissionswellenlänge verschiebt. Die Strommodulation ist jedoch technisch einfacher realisierbar und bewirkt die Vorteile des hier beschriebenen Verfahrens.

Das beschriebene Verfahren kann vorteilhafterweise für die Methandetektion eingesetzt werden. Grundsätzlich eignet sich das Verfahren für die Detektion verschiedenartigster Gase, die lediglich auswertbare Absorptionslinien in ihrem Spektrum aufweisen müssen. Diese Linien müssen innerhalb des Abstimmbereiches eines in der Praxis einsetzbaren Lasers liegen, wobei die Verschiebung des Abstimmbereiches mit der Temperatur zu berücksichtigen ist. Das Methanspektrum weist im Bereich der Wellenlänge 1,65 µm gleichmäßig beabstandete Linien im Spektrum auf. Bei sämtlichen Temperaturen des Messaufbaus wird jeweils mindestens eine Absorptionslinie durch den Laser erfasst. Damit wird eine Konzentrationsmessung in einem weiten Temperaturbereich ohne Stabilisierung der Laserarbeitstemperatur ermöglicht.

## Patentansprüche

1. Verfahren zur selektiven Detektion von Gasen mittels Laserspektroskopie im infraroten Wellenlängenbereich unter Einsatz von mindestens einer vertikal emittierenden Laserdiode (VCSEL), wobei die Emissionswellenlänge einer Laserdiode bei unterschiedlicher Arbeitstemperatur im Raumtemperaturbereich oder darüber ohne Temperaturstabilisierung des Lasers über mindestens eine ausgewählte Spektrallinie in einem Spektrum eines zu detektierenden Gases durch Veränderung ihres Betriebsstromes durchgestimmt wird und ein vorhandenes Gas anhand von mindestens einer detektierten Spektrallinie erkannt wird.

2. Verfahren nach Anspruch 1, bei dem zusätzlich durch eine Absorption im Bereich jeweils einer Spektrallinie die Gaskonzentration ermittelt wird.

3. Verfahren nach einem der vorhergehenden Ansprüche, bei dem die mindestens eine Laserdiode diskontinuierlich betrieben wird.

4. Verfahren nach Anspruch 3, bei dem die Messzeit im Vergleich zur Auszeit zwischen zwei Messungen sehr kurz ist.

5. Verfahren nach Anspruch 3 oder 4, bei dem zur Steuerung bzw. Regelung des intermittierenden Betriebes ein Mikrocontroller eingesetzt wird.

6. Verfahren nach einem der vorhergehenden Ansprüche, bei dem die elektrische Versorgung Netz-unabhängig erfolgt.

7. Verfahren nach Anspruch 6, bei dem die elektrische Versorgung mittels einer autarken Energiequelle geschieht.

8. Verfahren nach Anspruch 7, bei dem die autarke Energiequelle eine Batterie oder Solarzelle ist oder über einen Installations-Bus dargestellt wird.

9. Verfahren nach einem der vorhergehenden Ansprüche, bei dem vertikal emittierende Laserdioden auf der Basis von Indiumphosphit (InP), Galliumarsenid (GaAs) oder Indiumantimonid (InAs) verwendet werden.

10. Verfahren nach einem der vorhergehenden Ansprüche, bei dem zusätzlich die Arbeitstemperatur bzw. die Umgebungstemperatur des gesamten Sensoraufbaues gemessen wird.

11. Verfahren nach einem der vorhergehenden Ansprüche, bei dem zur Erhöhung der Detektionssicherheit eine Vorabsorption mit dem zu messenden Gas eingesetzt wird.

12. Verfahren nach einem der vorhergehenden Ansprüche, bei dem die Detektion von Gasen in Gebäuden betrieben wird.

13. Verfahren nach einem der vorhergehenden Ansprüche, bei dem Methan (CH₄), Kohlenstoffdioxid (CO₂), Kohlenstoffmonoxid (CO), Feuchte (H₂O) oder Sauerstoff (O₂) detektiert wird.
